# EUROPÄISCHE PATENTSCHRIFT

(11) **EP 1 792 014 B1**
(45) Veröffentlichungstag und Bekanntmachung des Hinweises auf die Patenterteilung: **28.05.2008**
(21) Anmeldenummer: 05790871.7
(22) Anmeldetag: 07.09.2005
(51) Int. Cl.: E01C 3/00, E01C 11/16, E01C 11/18, B29D 31/00

(54) **WABENWERKSTOFF AUS THERMOFUSIONIERBAREM MATERIAL**
HONEYCOMB MATERIAL FROM THERMOFUSIBLE MATERIAL
MATERIAU ALVEOLAIRE COMPOSE DE MATERIAU THERMOFUSIBLE

(30) Priorität: 10.09.2004 DE 102004044278
(43) Veröffentlichungstag der Anmeldung: 06.06.2007
(73) Patentinhaber: Schmidt, Heinz, 51588 Nümbrecht (DE); Michels, Bernard J., L-2412 Howald (LU)
(72) Erfinder: Schmidt, Heinz, 51588 Nümbrecht (DE); Michels, Bernard J., L-2412 Howald (LU)
(74) Vertreter: Kayser, Martin
(86) Internationale Anmeldenummer: PCT/DE2005/001564
(87) Internationale Veröffentlichungsnummer: WO 2006/026971

(56) Entgegenhaltungen:
- US-A- 4 572 705
- US-A- 4 797 026
- US-A- 5 106 227

## Beschreibung

Die vorliegende Erfindung betrifft einen Wabenwerkstoff mit hexagonaler oder ähnlicher Wabenstruktur. Weiterhin betrifft die Erfindung eine Vorrichtung und ein Verfahren zur Herstellung eines solchen Wabenwerkstoffes.

Wabenwerkstoffe bzw. Elemente mit vorwiegend hexagonaler Wabenstruktur werden vielfach und in zunehmendem Maße eingesetzt. Gründe hierfür sind insbesondere die hohe Druckfestigkeit und Steifigkeit derartiger Strukturen.

Bekannt ist auch der Einsatz von Wabenwerkstoffen für die Konsolidierung von Böden. Beispielsweise werden im Straßenbau in Sand- oder Sumpfgebieten Wabenwerkstoffe aus Folien oder Vliesen auf den Untergrund gelegt und die Wabenzellen mit Steingut oder einem anderen geeigneten Material gefüllt. Die gefüllten Wabenwerkstoffe erreichen dadurch eine Druckfestigkeit, die der Druckfestigkeit von Beton nahe kommt. Gegenüber Beton besteht aber der Vorteil, dass der Wabenwerkstoff wasserdurchlässig ist. US-A-4797026, US-A-4572705 und US-A-5106227 beschreiben Wabenstrukturen.

Um das Einfüllen des Baumaterials zu erleichtern, müssen die Wabenzellen einen relativ großen Durchmesser aufweisen (vorzugsweise 10 mm bis 500 mm, teilweise sogar mehr). Auch muss der Wabenwerkstoff relativ fest sein, um ein Umknicken der Oberkanten während des Einfüllens zu verhindern. So haben sich für diese Anwendungen als Ausgangsmaterial relativ dicke Vliese bewährt. Diese werden durch einen aufwendigen Nähprozess hergestellt, was zu niedriger Produktivität und hohen Kosten führt.

Die Aufgabe der vorliegenden Erfindung besteht darin, einen Wabenwerkstoff zu schaffen, der sich für eine Konsolidierung von Untergrund eignet. Der Wabenwerkstoff soll kostengünstig und einfach herstellbar sein. Weiterhin besteht die Aufgabe der vorliegenden Erfindung darin, eine Vorrichtung und ein Verfahren bereitzustellen, mit denen ein derartiger Wabenwerkstoff herstellbar ist. Die Ureigenschaften des Ausgangsmaterials sollen erhalten bleiben.

Erfindungsgemäß wird die Aufgabe durch einen Wabenwerkstoff gelöst, der aus Abschnitten eines thermofusionierbaren textilen Materials gebildet ist, wobei die Abschnitte derart miteinander verschweißt sind, dass Zellen gebildet sind nach Anspruch 1.

Weiterhin wird die Aufgabe durch ein Verfahren mit den Merkmalen nach Anspruch 7gelöst.

Im Rahmen dieser Erfindung beinhaltet der Begriff textiles Material "woven" und "nonwoven" (Vlies) Material oder auch Pseudogewebe. Vorzugsweise ist das textile Material zumindest überwiegend aus einem thermofusionierbaren Kunststoff gebildet. Der Anteil thermofusionierbarer Fäden ist dabei von der gewünschten Druckfestigkeit des Wabenwerkstoffes und den Ausgangsmaterialien abhängig. Es ist insbesondere auch möglich und sinnvoll, das textile Material vollständig aus nur einem Material, insbesondere aus einem Kunststoff zu bilden.

Unter dem Begriff Vlies wird im Sinne der Erfindung eine zusammenhängende Fadenschicht und/oder werden zusammenhängende Fadenschichten verstanden. Beispielsweise sind auch Spinnvliese geeignet, die direkt aus einer Spinnmasse kontinuierlich hergestellt werden. Auf einem Transportband wird das Fadengelege abgelegt und nachfolgend gegebenenfalls chemisch oder thermisch verfestigt. Anschließend kann das Vlies noch gefärbt und/oder bedruckt werden. Als Rohstoffe kommen überwiegend Polypropylen, aber auch Polyester, Polyamid oder Copolymerfäden infrage.

Auch durch Spalten und Splittern von Folie mit Bürsten oder Nadelwalzen, durch Nitscheln, Luftstrahlen oder Ultraschall sind Vliese erzeugbar.

Nachteilig bei ungewebten Vliesen ist, dass bei der Herstellung auf einem Transportband abgelegte Fäden bezogen auf den Querschnitt des Fadengeleges unterschiedlich fest miteinander verbunden sind. Dies ist darauf zurückzuführen, dass die Fadengelege üblicherweise über Trommeln miteinander verpresst werden, was dazu führt, dass jeweils außen, also an den den Trommeln zugewandten Seiten der Fadengelege, eine höhere Verdichtung erfolgt. Dies wiederum führt dazu, dass die fertige Vliese bzw. Spinnvliese verhältnismäßig leicht delaminieren, sich also bezogen auf den Querschnitt des Fadengeleges in ihrem mittleren Bereich voneinander lösen.

Erfindungsgemäß wird also vorgeschlagen, den Wabenwerkstoff nicht durch den aufwendigen Nähprozess, sondern durch einen Schweißprozess herzustellen. Dies setzt voraus, dass das textile Material schweißbar ist, also aus einem ausreichenden Anteil an thermofusionierbaren Fäden besteht. Der Schweißprozess hat den Vorteil, dass durch die Wärmezufuhr eine Nachverfestigung des textilen Materials erreicht wird.

Bei der Herstellung des erfindungsgemäßen Wabenwerkstoffes wird das textile Material einer Schweißvorrichtung bei Raumtemperatur in Bahnenform zugeführt. Zwei einander gegenüberliegende Bahnabschnitt werden bereichsweise unter Zuführung von Wärme aufgeschmolzen, die Schmelzen dann vereinigt und abgekühlt. Die Abkühlung kann durch Kältezufuhr unterstützt werden. Die Bahnabschnitte bilden in den aufgeschmolzenen und dann abgekühlten Bereichen einen monolithischen Block aus, der makroskopisch homogen ist. Die verschweißten Bahnabschnitte werden dann mit einem weiteren Bahnabschnitt auf die gleiche Art und Weise verbunden, wobei die "Schweißnähte" in Längsrichtung der Bahnen versetzt zu den bereits vorhandenen Schweißnähten angeordnet sind. Anschließend werden die verbundenen Bahnabschnitte unter adäquater Temperatur zu dem zu erzielenden Wabenkörper auseinander gezogen.

Erfindungsgemäß kann ein Schweißverfahren verwendet werden, das auf dem Prinzip der Außenerwärmung und/oder dem Prinzip des Innenerwärmung basiert.

Bei einem Verfahren nach dem Prinzip des Außenschweißens wird mit Hilfe von Heizelementen Wärme von außen in die Bahnabschnitte eingeleitet, bis beide Bahnabschnitte die Schmelztemperatur erreicht haben. Die Wärme wird also durch Bahnabschnitt hindurch geleitet, bis die aufeinander zuweisenden Flächen ausreichend erwärmt sind. Die Wärme kann dabei nur durch einen Bahnabschnitt gebildet werden, möglich ist aber auch eine Erwärmung beider zu verbindender Bahnabschnitte.

Bei einem Verfahren nach dem Prinzip der Innenerwärmung wird dagegen ein Heizelement zwischen die zu verbindenden Bahnabschnitte gebracht. Die Bahnabschnitte werden also lediglich auf den Seiten erwärmt, die später miteinander verbunden werden sollen.

Möglich ist aber auch eine Kombination der beiden Verfahren. Insbesondere bei Wabenwerkstoffen mit großen Zellen und starkem bzw. dickem textilem Material ist es sinnvoll, die Bahnabschnitte von außen und von innen zu erwärmen. Die Wärme erreicht dann zuverlässig alle Fäden.

Die genannten Verfahren sind nur beispielhaft zu verstehen, entscheidend für die Herstellung eines erfindungsgemäßen Wabenwerkstoffes ist lediglich, dass eine ausreichend stabile Schweißverbindung gebildet wird.

Wesentlich ist aber, dass die Bereiche, die beim Verschweißen zusammengedrückt werden, sozusagen nachkalandriert werden. Die Bereiche dazwischen, also spätere Diagonalen, dagegen nicht. Die nicht nachkalandrierten Bereiche bleiben gut wasserdurchlässig.

Das textile Material kann erfindungsgemäß aus amorphem oder teilkristallisiertem Kunststoff gebildet sein.

Durch das Recken richten sich auf Molekularebene die Makromolekülketten aus und bilden wegen der nachher zugeführten Energie ein teilweises pseudoatomares Gitter. Das Material kristallisiert und je nach Ratio des kristallisierten Anteils zum amorphen Anteil ergibt sich ein bestimmter, einstellbarer Kristallisationsgrad. Der amorphe Anteil kann dadurch zumindest sehr gering sein.

Teilweise kristallisierte Materialien sollten erfindungsgemäß nach dem Prinzip der Innenerwärmung verschweißt werden. Dieses Verfahren hat den Vorteil, dass die zugeführte Wärme nicht vollständig durch einen der beiden Bahnabschnitte hindurch geleitet werden muss.

Das Material wird deshalb zunächst erfindungsgemäß auf eine Temperatur erwärmt, die möglichst knapp unterhalb der Schmelztemperatur des Materials liegt (z. B. etwa 205 bis 210°C bei PET). Es erfolgt dann eine kurze, sprunghafte weitere Erwärmung, die eine Schmelze initiiert. Vorzugsweise beträgt die Zeitspanne, in der das Material die Schmelztemperatur erreicht, weniger als 1s, vorzugsweise etwa 0.1 s. Beim anschließenden Abkühlen setzt zwar eine geringe Nachkristallisation ein, diese kann aber, ebenso wie beim Temperaturanstieg, gesteuert werden. Je nach Anforderung kann eine geringe Nachkristallisation im Schweißnahtbereich in Kauf genommen werden, durch starke Abkühlung (Abschrecken) kann sie aber auch sehr stark begrenzt werden.

Vorteilhafterweise können beispielsweise die Heizelemente einen Kühlmittelkreislauf aufweisen, denkbar sind aber auch andere gleichwirkende Mittel

Wie bereits oben erläutert, wird der Wabenwerkstoff erfindungsgemäß mit Hilfe einer Vorrichtung gefertigt, die nach dem Prinzip der Innenschweißung arbeitet. Ein Schweißkamm mit einer Vielzahl fingerförmiger Heizelemente bewegt sich dabei zwischen die zu verbindenden Bahnen, erwärmt diese unter Kontakt zunächst bis kurz vor die Schmelztemperatur und wird dann zu den Bahnen wieder herausgezogen.

In einer vorteilhaften Ausführungsvariante ist der Heizkamm in einer oberen Position, also dann, wenn er sich vollständig zwischen den Bahnabschnitten befindet, durch die mechanische Peripherie eingeklemmt. Er wird zunächst um einige Millimeter nach unten gezogen, um den Wärmeübergang durch Reibung zu verbessern. In dieser Aufheizphase wird die Geschwindigkeit stark verringert, und sobald die Schmelze initiiert ist, hoch beschleunigt. Die Temperatursteuerung bzw. -regelung stellt also dann soviel Energie bereit, dass die ganze Folienhöhe in einer minimalen Zeit den Schmelzpunkt erreicht. Da der Heizkamm dann möglichst schnell entfernt wird, ist die für die Nachkristallisation zur Verfügung stehende Zeit entsprechend gering.

Der Prozess ist an die Wärmediffusionsrate angepasst. Beispielsweise verweilt der Heizkamm etwa 0,6 Sekunden zwischen den Bahnen, der Schweißvorgang dauert etwa 0,4 Sekunden.

Im Folgenden wird die Erfindung anhand beiliegender Figuren erläutert. Weitere Vorteile und Ausführungsvarianten gehen aus dieser Beschreibung und den beiliegenden Ansprüchen hervor.

Es zeigen:
- Figur 1:: eine Prinzipdarstellung eines Wabenwerkstoffes,
- Figur 2:: eine Prinzipskizze der Herstellung eines Wabenwerkstoffes durch Erwärmen der zu verbindenden Folien von außen,
- Figur 3: eine Prinzipskizze der Herstellung eines Wabenwerkstoffes durch Erwärmen der zu verbindenden Folien von innen,

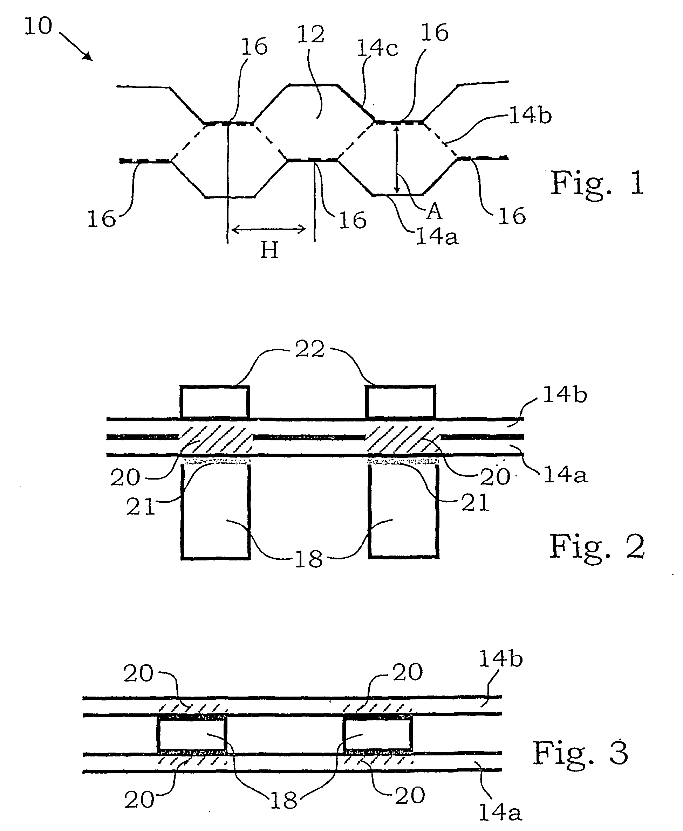

Figur 1 zeigt in einer vereinfachten prinzipiellen Darstellung einen Ausschnitt aus einem Wabenwerkstoff 10. Dieser weist im vorliegenden Ausführungsbeispiel 6-eckige Zellen 12 auf.

Der Wabenwerkstoff 10 ist aus einem textilen Material 14 bzw. aus miteinander verbundenen Bahnabschnitten 14 a, 14 b, 14 c gebildet. Im gezeigten Ausführungsbeispiel sind zum besseren Verständnis drei aneinanderliegende Bahnabschnitte 14 a, 14 b, 14 c unterschiedlich dargestellt, was aber nicht bedeuten soll, dass es sich um Bahnabschnitte 14 a, 14 b, 14 c aus unterschiedlichen Materialien handelt. Die Bahnabschnitte 14 a, 14 b, 14 c sind bereichsweise über Verbindungsschnitte 16 miteinander verbunden, wobei die Verbindungsabschnitte 16 von Bahnabschnitt zu Bahnabschnitt um einen Betrag H zu einander versetzt sind. Je nach Wahl der Größe des Versatzes H ist die Form der Zellen 12 an gewünschte Bedingungen anpassbar. H ist die Distanz von Verbundmitte zu Verbundmitte.

Weiterhin ist eine Zellteilung A dargestellt, die quasi eine Höhe einer Zelle 12 bezeichnet. Die Zellteilung A beträgt vorzugsweise mehr als 8 mm.

Erfindungsgemäß ist das textile Material 14 durch ein thermofusionierbares bzw. schweißbares Material gebildet.

Diese Erwärmung des zu verschweißenden textilen Materials 14 kann einerseits nach dem Prinzip der Innenerwärmung und anderseits nach dem Prinzip der Außenerwärmung oder durch eine Mischform erfolgen.

Figur 2 verdeutlicht das Prinzip der Außenerwärmung. Ein erster Bahnabschnitt 14 a wird in Kontakt mit einem zweiten Bahnabschnitt 14 b und Heizelemente 18 werden in Kontakt mit dem ersten Bahnabschnitt 14 a gebracht. Die Heizelemente 18 erwärmen diese derart, dass eine Wärmeübertragung zunächst von den Heizelementen 18 zum ersten Bahnabschnitt 14 a und dann vom ersten Bahnabschnitt 14 a zum zweiten Bahnabschnitt 14 b erfolgt. Es entsteht ein Erwärmungsbereich 20. Üblicherweise werden die beiden Bahnabschnitt 14 a, 14 b dabei gegen Haltestempel 22 gedrückt, was in diesem Bereich zu einer gezielten Nachkalandrierung führt. Anschließend werden die Heizelemente 18 zurückgezogen, die Bahnabschnitte 14 a, 14 b sind verschweißt.

Nachdem die beiden Bahnabschnitte 14 miteinander verbunden worden sind, wird ein dritter Bahnabschnitt 14 c (vgl. Fig. 1) an diese beiden Bahnabschnitte angefügt. Dabei ist es zur Ausführung der Wabenstruktur notwendig, dass die Verbindungsabschnitte 16 zwischen dem ersten Bahnabschnitt 14 a und dem zweiten Bahnabschnitt 14 b versetzt zu den dann folgenden Verbindungsabschnitten zwischen beispielsweise dem zweiten Bahnabschnitt 14 b und dem dritten Bahnabschnitt 14 c angeordnet sind.

Figur 3 verdeutlicht das Prinzip der Innenerwärmung. Die Heizelemente 18 werden zwischen dem ersten Bahnabschnitt14 a und dem zweiten Bahnabschnitt 14 b angeordnet. Durch die Erwärmung entsteht gleichzeitig in beiden Folienabschnitten 14 a, 14 b der Erwärmungsbereich 20, die Wärmeübertragung erfolgt ausgehend von den Heizelementen 18 über die einander zugewandte Innenflächen der Bahnabschnitte 14 a, 14 b in diese hinein. Die Erwärmung kann insgesamt sehr schnell bis zur oder über die Schmelztemperatur erfolgen, wobei die Wärmediffusionsrate berücksichtigt wird. Wesentlich bei der Erwärmung ist, dass die Schmelztemperatur des Materials möglichst kurz andauert, um eine Nachkristallisation zu vermeiden bzw. einzuschränken. Ziel ist es, durch nur einen minimalen Bereich der Bahnabschnitte 14 a, 14 b physikalisch zu verändern, also nur einen möglichst kleinen Bereich des Erwärmungsbereiches 20.

Nachdem die beiden Bahnabschnitte 14 a und 14 b die Schweißtemperatur erreicht haben, werden die Heizelemente 18 entfernt und die beiden Bahnabschnitte 14 a, 14 b werden, beispielsweise mit Hilfe von bewegbaren nicht dargestellten Zylindern, zusammengedrückt. Die bewegbaren Zylinder können mit einem weichen Material belegt sein, um die Bahnabschnitte 14a. 14b möglichst schonend zusammenzudrücken. Die Zylinder bewegen sich nur auf die Bahnabschnitte 14a, 14b zu, reiben also nicht auf dem Material ab. Ein Walkeffekt wird dadurch verhindert.

In einer besonders vorteilhaften Ausführungsvariante klemmen die bewegbaren Zylinder die Heizelemente 18, wenn sie sich zwischen den Bahnabschnitten 14 a, 14b befinden, ein, sie drücken also die Bahnabschnitte 14 a, 14b gegen die Heizelemente 18. Nach Erreichen der Schweißtemperatur ziehen sich die Heizelemente 18 zurück.

Nachdem die beiden Bahnabschnitte 14 a, 14 b miteinander verbunden worden sind, wird ein dritter Bahnabschnitt 14 c (vgl. Fig. 1) an diese beiden Bahnabschnitte 14 a, 14 b angefügt. Dabei ist es zur Ausbildung der Wabenstruktur notwendig, dass die Verbindungsabschnitte 16 zwischen dem ersten Bahnabschnitt 14 a und dem zweiten Bahnabschnitt 14 b versetzt zu den dann folgenden Verbindungsabschnitten zwischen beispielsweise dem zweiten Bahnabschnitt 14 b und dem dritten Bahnabschnitt14 c angeordnet sind.

Üblicherweise erfolgt ein Auffächern der zusammengefügten Bahnabschnitte 14a, 14 b zum endgültigen Wabenwerkstoff 10. Dies kann aber auch später, beispielsweise am Einsatzort des Wabenwerkstoffes erfolgen. Nachdem also ausreichend Bahnabschnitte 14 zusammengefügt wurden, werden diese derart mechanisch auseinander gezogen, dass sich die Wabenzellen öffnen und sich nach Abkühlen der gewünschte Wabenwerkstoff 10 ausbildet. Dieser kann durch geeignete Verfahren in geeignete Abmessungen gebracht werden, beispielsweise können aufgefächerte Abschnitte von dem sich ausbildenden Hobestrang abgeschnitten werden.

Ein erfindungsgemäßes Verfahren zur Herstellung des Wabenwerkstoffes 10 weist also die folgenden Schritte auf:
a. Bereitstellen eines thermofusionierbaren textilen Materials 14,
b. Verschweißen zweier Bahnabschnitt 14a, 14b des thermofusionierbaren textilen Materials 14 durch Verbinden einer Mehrzahl von Verbindungsabschnitten 16,
c. Verschweißen der zusammengefügten Bahnabschnitte (14 a, 14 b) mit einem nächsten Bahnabschnitt (14 c) nach dem gleichen Verfahren, wobei die neuen Verbindungsabschnitte (16) versetzt zu den zuvor ausgebildeten Verbindungsabschnitten (16) angeordnet sind,
d. Beliebig häufiges Wiederholen von Schritt c),
e. Auffächern der zusammengefügten Bahnabschnitt 14a, 14 b zum Wabenwerkstoff 10.

Die dargestellten und beschriebenen Ausführungsbeispiele sind lediglich beispielhaft zu verstehen, die Erfindung soll nicht auf diese beschränkt sein.

## Patentansprüche

1. Wabenwerkstoff (10), gebildet aus Abschnitten (14a, 14b, 14c) eines thermofusionierbaren textilen Materials (14), wobei die Abschnitte derart miteinander verschweißt sind, dass Zellen (12) ausgebildet sind.

2. Wabenwerkstoff (10) nach Anspruch 1, **dadurch gekennzeichnet, dass** das textile Material (14) aus einem ungewebten Vliesstoff gebildet ist.

3. Wabenwerkstoff (10) nach Anspruch 1, **dadurch gekennzeichnet, dass** das textile Material (14) aus einem mechanisch gewebtem Stoff gebildet ist.

4. Wabenwerkstoff (10) nach einem der Ansprüche 1 bis 3, **dadurch gekennzeichnet, dass** das textile Material (14) aus einem amorphen Material gebildet ist.

5. Wabenwerkstoff (10) nach einem der Ansprüche 1 bis 3, **dadurch gekennzeichnet, dass** das textile Material (14) aus einem zumindest teilweise kristallisierten Material gebildet ist.

6. Wabenwerkstoff (10) nach einem der Ansprüche 1 bis 5, **dadurch gekennzeichnet, dass** die Zellen (12) eine Zellteilung (A) von mindestens 8 mm aufweisen.

7. Verfahren zur Herstellung eines Wabenwerkstoffes (10) nach einem der Ansprüche 1 bis 6, **gekennzeichnet durch** die Verfahrenschritte:
a. Bereitstellen eines textilen Materials (14),
b. Verschweißen zweier Bahnabschnitte (14a, 14b) im Bereich von Verbindungsabschnitten (16),
c. Verbinden der zusammengefügten Bahnabschnitte (14 a, 14 b) mit einem nächsten Folienabschnitt (14 c) nach dem gleichen Verfahren, wobei neue Verbindungsabschnitte (16) versetzt zu den zuvor ausgebildeten Verbindungsabschnitten (16) angeordnet sind,
d. Beliebig häufiges Wiederholen von Schritt c),

8. Verfahren nach Anspruch 13 oder 14, **dadurch gekennzeichnet, dass** die Erwärmung der Bahnabschnitte (14a, 14 b) durch außen angeordnete Heizelemente (18) erfolgt.

9. Verfahren nach Anspruch 13 oder 14, **dadurch gekennzeichnet, dass** die Erwärmung der Bahnabschnitte (14a, 14 b) durch zwischen den Bahnabschnitten (14a, 14b) angeordnete Heizelemente (18) erfolgt.

10. Verfahren nach Anspruch 13 oder 14, **dadurch gekennzeichnet, dass** die Erwärmung der Bahnabschnitte (14a, 14 b) durch zwischen den Bahnabschnitten (14a, 14b) und durch außen angeordnete Heizelemente (18) erfolgt.

11. Verfahren nach einem der Ansprüche 13 bis 17, **dadurch gekennzeichnet, dass** anschließend ein Auffächern der zusammengefügten Folienabschnitte (14a, 14 b) zum Wabenwerkstoff (10) erfolgt.

## Claims

1. A honeycomb material (10), formed from portions (14a, 14b, 14c) of a thermofusible textile material (14), said portions being welded together so as to form cells (12).

2. The honeycomb material (10) as set forth in claim 1, **characterized in that** the textile material (14) is formed from a nonwoven fleece.

3. The honeycomb material (10) as set forth in claim 1, **characterized in that** the textile material (14) is formed from a mechanically woven fabric.

4. The honeycomb material (10) as set forth in any one of the claims 1 through 3, **characterized in that** the textile material (14) is formed from an amorphous material.

5. The honeycomb material (10) as set forth in any one of the claims 1 through 3, **characterized in that** the textile material (14) is formed from an at least in parts crystallized material.

6. The honeycomb material (10) as set forth in any one of the claims 1 through 5, **characterized in that** the cells (12) have a cell division (A) of at least 8 mm.

7. A method of manufacturing a honeycomb material (10) as set forth in any one of the claims 1 through 6, **characterized by** the following method steps:
a) providing a textile material (14),
b) welding together two web portions (14a, 14b) in the region of connecting portions (16),
c) joining together the bonded web portions (14a, 14b) and a next foil portion (14c) using the same method, new connecting portions (16) being disposed offset relative to the connecting portions (16) formed before,
d) repeating step c) ad lib.

8. The method as set forth in claim 7, **characterized in that** the web portions (14a, 14b) are heated by heating elements (18) disposed outside.

9. The method as set forth in claim 7, **characterized in that** the web portions (14a, 14b) are heated by heating elements (18) disposed between the web portions (14a, 14b).

10. The method as set forth in claim 7, **characterized in that** the web portions (14a, 14b) are heated by heating elements (18) disposed between the web portions (14a, 14b) and outside.

11. The method as set forth in any one of the claims 7 through 11, **characterized in that** the bonded foil portions (14a, 14b) are next fanned out to form the honeycomb material (10).

## Revendications

1. Matériau à nid d'abeilles (10) formé par des sections (14a, 14b, 14c) d'une matière textile apte à être thermofusionnée (14), lesdites sections étant soudées entre elles de manière à former des cellules (12).

2. Matériau à nid d'abeilles (10) selon la revendication 1, **caractérisé par le fait que** ladite matière textile (14) est formée d'un non-tissé.

3. Matériau à nid d'abeilles (10) selon la revendication 1, **caractérisé par le fait que** ladite matière textile (14) est formée d'une étoffe tissée mécaniquement.

4. Matériau à nid d'abeilles (10) selon l'une des revendications 1 à 3, **caractérisé par le fait que** ladite matière textile (14) est formée d'une matière amorphe.

5. Matériau à nid d'abeilles (10) selon l'une des revendications 1 à 3, **caractérisé par le fait que** ladite matière textile (14) est formée d'une matière au moins partiellement cristallisée.

6. Matériau à nid d'abeilles (10) selon l'une des revendications 1 à 5, **caractérisé par le fait que** les cellules (12) présentent une division cellulaire (A) d'au moins 8 mm.

7. Procédé de fabrication d'un matériau à nid d'abeilles (10) selon l'une des revendications 1 à 6, **caractérisé par** les étapes de procédé consistant à :
a) mettre à disposition une matière textile (14),
b) souder entre elles deux sections de bande (14a, 14b) au niveau de sections de jonction (16),
c) relier les sections assemblées de bande (14a, 14b) à une section suivante de feuille (14c) selon le même procédé, de nouvelles sections de jonction (16) étant disposées de manière décalée par rapport aux sections de jonction (16) réalisées auparavant,
d) répéter l'étape c) autant de fois que l'on voudra.

8. Procédé selon la revendication 7, **caractérisé par le fait que** l'échauffement des sections de bande (14a, 14b) est réalisé par des éléments de chauffage (18) disposés à l'extérieur.

9. Procédé selon la revendication 7, **caractérisé par le fait que** l'échauffement des sections de bande (14a, 4b) est réalisé par des éléments de chauffage (18) disposés entre lesdites sections de bande (14a, 14b).

10. Procédé selon la revendication 7, **caractérisé par le fait que** l'échauffement des sections de bande (14a, 14b) est réalisé par des éléments de chauffage (18) disposés entre les sections de bande (14a, 14b) et par des éléments de chauffage (18) disposés à l'extérieur.

11. Procédé selon la revendication 7, **caractérisé par le fait que**, ensuite, les sections assemblées de feuille (14a, 14b) sont déployées pour former ledit matériau à nid d'abeilles (10).
